# EUROPEAN PATENT APPLICATION

(11) **EP 2 413 580 A1**
(43) Date of publication of application: **01.02.2012**
(21) Application number: 09845080.2
(22) Date of filing: 26.05.2009
(51) Int. Cl.: H04M 3/00

(54) **VOICE SERVICE PROCESSING METHOD AND SYSTEM, OFFICE END DEVICE AND VOICE GATEWAY**

(71) Applicant: Huawei Device Co., Ltd., Shenzhen, Guangdong 518129 (CN)
(72) Inventor: HUA, Jin, Guangdong 518129 (CN); ZHANG, Kai, Guangdong 518129 (CN)
(74) Representative: Thun, Clemens
(86) International application number: PCT/CN2009/071985
(87) International publication number: WO 2010/135863

(57) **Abstract**

The present invention provides a method and system for voice gateway power-off processing, a central office device, and a voice gateway. The method includes: A relay in a central office device connects a voice call module in the central office device with a user side when a user power supply system turns off, and there is a voice outgoing call or a voice incoming call at the user side. The voice call module in the central office device provides a voice service for the user side. According to the embodiments of the present invention, the cost is low, and the operability is improved.

## Description

### FIELD OF THE INVENTION

The present invention relates to a network communication technology, and in particular, to a method and system for voice gateway power-off processing, a central office device, and a voice gateway.

### BACKGROUND OF THE INVENTION

Currently, with the popularization of a voice gateway, increasingly more and more operators consider replacing a narrowband switch of an original public switched telephone network (Public Switched Telephone Network, PSTN) with the voice gateway, and provide a voice call service for a user. The voice gateway is also referred to as an analog telephony adapt (Analog Telephony Adapt, ATA) or an integrated access device (Integrated Access Device, IAD).

Currently, power of the voice gateway is provided by a user power supply system. After the user power supply system turns off, the voice gateway cannot work. A solution in the conventional art is to configure a high-capacity backup battery in the voice gateway. After the user power supply system turns off, the backup battery provides the power for the voice gateway, and thus normal working of the voice gateway is ensured. However, the cost of the high-capacity battery is high, and after the lifespan of the high-capacity battery terminates, it is difficult for an ordinary user to find a replacing battery.

In the process of implementing the present invention, the inventor finds that at least the following problems exist in the conventional art: cost is high and operability is poor due to the use of a high-capacity backup battery for voice gateway power-off processing at present.

### SUMMARY OF THE INVENTION

The present invention provides a voice gateway power-off processing method, which may solve problems that cost is high and operability is poor due to the use of a high-capacity backup battery for voice gateway power-off processing in the conventional art.

An embodiment of the present invention provides a voice gateway power-off processing method, including:
connecting, by a relay in a central office device, a user side with a voice call module in the central office device, when a user power supply system turns off, and there is a voice outgoing call or a voice incoming call at the user side; and
providing, by the voice call module in the central office device, a voice service for the user side.

An embodiment of the present invention provides a voice gateway power-off processing method, including:
connecting, by a relay in a voice gateway, a user side with a central office device when a user power supply system turns off, and receiving a voice service provided by the central office device for the user side when there is a voice outgoing call or a voice incoming call at the user side.

An embodiment of the present invention provides a central office device, including:
a relay, configured to connect a voice call module in the central office device with a user side when a user power supply system turns off, and there is a voice outgoing call or a voice incoming call at the user side; and
the voice call module, configured to provide a voice service for the user side when connecting with the user side.

An embodiment of the present invention provides a voice gateway, including:
a relay, configured to connect a central office device with a user side when a user power supply system turns off, where the central office device is configured to provide a voice service for the user side when there is a voice outgoing call or a voice incoming call at the user side.

An embodiment of the present invention provides a voice gateway power-off processing system, including:
a voice gateway, configured to connect a central office device with a user side when a user power supply system turns off; and
the central office device, configured to provide a voice service for the user side when the user power supply system turns off, and there is a voice outgoing call or a voice incoming call at the user side.

It can be known from the foregoing technical solutions that, according to the embodiments of the present invention, the central office device provides the voice service for the user after the user power supply system turns off, which may avoid the problems that the cost is high and the operability is poor due to the use of the high-capacity backup battery for the voice gateway power-off processing in the conventional art; furthermore, the voice call module in the central office device provides the voice service for the user when there is the voice outgoing call or the voice incoming call at the user side, and the number of voice call modules that are set may be less than the number of users that may be served by the central office, and thus a high convergence ratio of the device is realized, and the device investment of the central office device is reduced.

### BRIEF DESCRIPTION OF THE DRAWINGS

FIG. 1 is a schematic flow chart of a method according to a first embodiment of the invention;
FIG. 2 is a schematic structural diagram of a central office device according to a second embodiment of the present invention;
FIG. 3 is a schematic structural diagram of a voice gateway according to a third embodiment of the present invention;
FIG. 4 is a schematic structural diagram of a system according to a fourth embodiment of the present invention;
FIG. 5 is a schematic structural diagram of a system according to a fifth embodiment of the present invention;
FIG. 6 is a schematic structural diagram of a system according to a sixth embodiment of the present invention; and
FIG. 7 is a schematic structural diagram of a system according to a seventh embodiment of the present invention.

### DETAILED DESCRIPTION OF THE EMBODIMENTS

The technical solutions according to the present invention are further described in detail below with reference to the accompanying drawings and the embodiments.

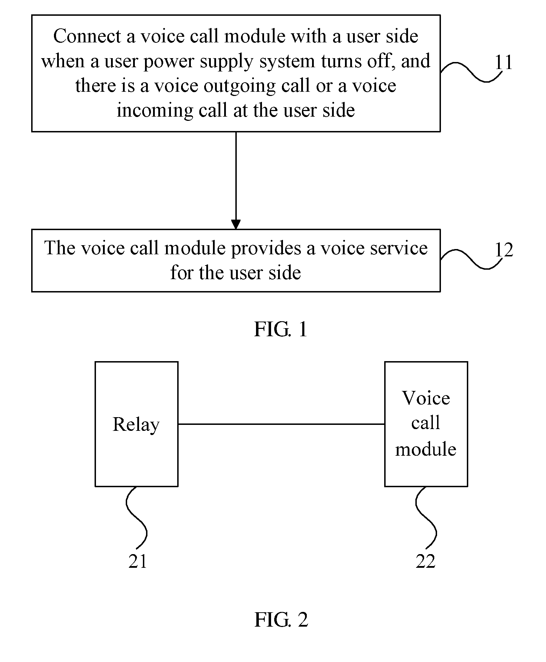

FIG. 1 is a schematic flow chart of a method according to a first embodiment of the invention. The method includes:
Step 11: A relay in a central office device connects a voice call module in the central office device with a user side when a user power supply system turns off, and there is a voice outgoing call or a voice incoming call at the user side.
Step 12: The voice call module in the central office device provides a voice service for the user side.

In a normal state, the relay is opened, that is, the voice call module in the central office device and the user side are maintained to be disconnected; when there is a voice outgoing call or a voice incoming call at the user side, the relay is closed to enable the voice call module in the central office device to connect with the user side; the voice call module may be a voip module configured to provide a voice signal carried over an IP network (Voice over IP, voip), and may also be a PSTN narrowband switch configured to provide a conventional voice service.

A signal controlling the relay to be closed may be a voice outgoing call event signal sent by the user side, may be a voice outgoing call event of the user side, and may also be a voice incoming call event of the user side. Reference may be made to the following embodiments for details.

According to this embodiment, the central office device provides the voice service for the user after the user power supply system turns off, which may avoid the problems that the cost is high and the operability is poor due to the use of a high-capacity backup battery for voice gateway power-off processing in the conventional art; furthermore, the voice call module in the central office device provides the voice service for the user when there is the voice outgoing call or the voice incoming call at the user side, and the number of voice call modules that are set may be less than the number of users that may be served by the central office, and thus a high convergence ratio of the device is realized, and the device investment of the central office device is reduced.

A method process of the central office device side is described above, and for the voice gateway side, steps are executed as follows:

A relay in a voice gateway connects a user side with a central office device when a user power supply system turns off, and receives a voice service provided by the central office device for the user side when there is a voice outgoing call or a voice incoming call at the user side.

The voice gateway side may further execute the following steps. After detecting that a voice outgoing call event occurs at the user side, a voice event signal sending module in the voice gateway sends a voice outgoing call event signal to the central office device, so as to enable the central office device to provide a voice service for the user side according to the voice outgoing call event signal.

FIG. 2 is a schematic structural diagram of a central office device according to a second embodiment of the present invention. The central office device includes a relay 21 and a voice call module 22. The relay 21 is configured to connect the voice call module with a user side when a user power supply system turns off, and there is a voice outgoing call or a voice incoming call at the user side; and the voice call module 22 is configured to provide a voice service for the user side when connecting with the user side.

A module controlling the relay 21 to be opened or closed may be a voice outgoing call event signal receiving module or a voice outgoing event detection module or the voice call module 22. Specifically, the voice outgoing call event signal receiving module is connected with the relay 21, and is configured to receive the voice outgoing event signal of the user side, and control the relay 21 according to the voice outgoing call event signal, so as to enable the relay 21 to be closed, that is, to enable the voice call module 22 to connect with the user side. Alternatively, the voice outgoing call event detection module is connected with the relay 21, and is configured to detect the voice outgoing call event of the user side, and control the relay 21 when detecting that there is a voice outgoing call event at the user side, so as to enable the relay 21 to be closed, that is, to enable the voice call module 22 to connect with the user side. Alternatively, the voice call module 22 is further configured to detect a voice incoming call event of the user side, and control the relay 21 when detecting that there is the voice incoming call event at the user side, so as to enable the voice call module 22 to connect with the user side.

Further, the voice call module 22 connects with the user side when the user has a voice outgoing call or a voice incoming call, therefore, the number of voice call modules 22 may be much less than the number of users that may be served by the central office device. For example, the number of the users that may be served by the central office device (users connected with the central office device) is 100, but if it is determined according to statistics information that the number of users to be served simultaneously (having a voice outgoing call or a voice incoming call) is 10, only 10 voice call modules 22 (rather than 100) may be set, that is, the voice call module 22 may be a voice call module with a high convergence ratio. A convergence ratio is a ratio of the number of users that may be served (such as the foregoing 100) to the number of voice call modules (such as the foregoing 10).

In this embodiment, the voice call module provides the voice service for the user when there is the voice outgoing call or the voice incoming call at the user side, so that the number of voice call modules that are set may be less than the number of users that may be served by the central office, and thus the convergence ratio of voice call modules is increased, and device investment and cost of the voice call modules invested at the central office is reduced.

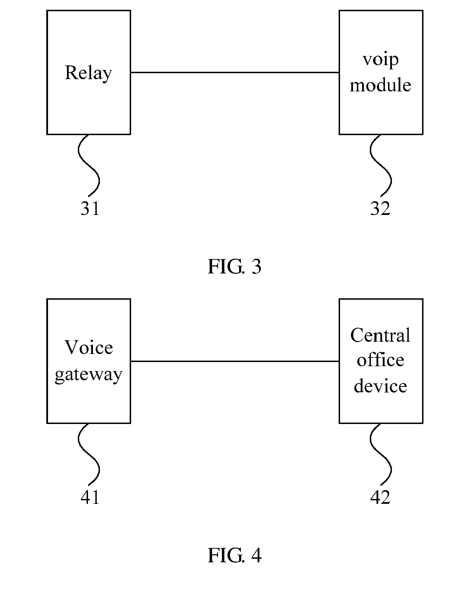

FIG. 3 is a schematic structural diagram of a voice gateway according to a third embodiment of the present invention. The voice gateway includes a relay 31. The relay 31 is configured to connect a central office device with a user side when a user power supply system turns off, and the central office device is configured to provide a voice service for the user side. In order to increase a convergence ratio of the central office device, the central office device may specifically provide the voice service for the user side when there is a voice outgoing call or a voice incoming call at the user side.

A voip module 32 may further be included in this embodiment. The voip module 32 is connected with the relay 31, and configured to provide a voip voice service for the user side when the user power supply system does not turn off, and the relay 31 is further configured to connect the voip module 32 with the user side when the user power supply system does not turn off. That is, in a normal state (when the user power supply system does not turn off), the user side (such as, a telephone) is connected with the voip module 32, the voip module 32 provides a voice service for the user, and the user power supply system provides power for the voip module 32. When the user power supply system turns off, the user side is connected with the central office device, and the central office device provides the voice service for the user side.

Further, in order to increase the convergence ratio of the central office device, this embodiment may further include a voice outgoing call event signal sending module and a battery module. The voice outgoing call event signal sending module is configured to detect a voice outgoing call event of the user side, and send a voice outgoing call event signal to the central office device after detecting that there is the voice outgoing call event at the user side, so as to enable the central office device to provide a voice service for the user side after the central office device receives the voice outgoing call event signal; the battery module is connected with the voice outgoing call event signal sending module, and is configured to provide power for the voice outgoing call event signal sending module. At this time, the battery module only provides power for the voice outgoing call event signal sending module rather than the entire voice gateway, so the battery module may be a low-capacity battery, and the low-capacity battery may be a battery that can be purchased conveniently in the marketplace. In this way, problems of increasing cost and difficult replacement that are caused by a high-capacity battery may be avoided.

According to this embodiment, the central office device provides the voice service for the user after the user power supply system turns off, which may avoid the problems that the cost is high and the operability is poor due to the use of a high-capacity backup battery for voice gateway power-off processing in the conventional art.

FIG. 4 is a schematic structural diagram of a system according to a fourth embodiment of the present invention. The system includes a voice gateway 41 and a central office device 42. The voice gateway 41 is configured to connect a central office device with a user side when a user power supply system turns off; the central office device 42 is configured to provide a voice service for the user side when the user power supply system turns off, and there is a voice outgoing call or a voice incoming call at the user side. Specifically, reference may be made to the following embodiments for judging whether there is the voice outgoing call or the voice incoming call at the user side.

According to this embodiment, the central office device provides the voice service for the user after the user power supply system turns off, which may avoid the problems that the cost is high and the operability is poor due to the use of a high-capacity backup battery for voice gateway power-off processing in the conventional art.

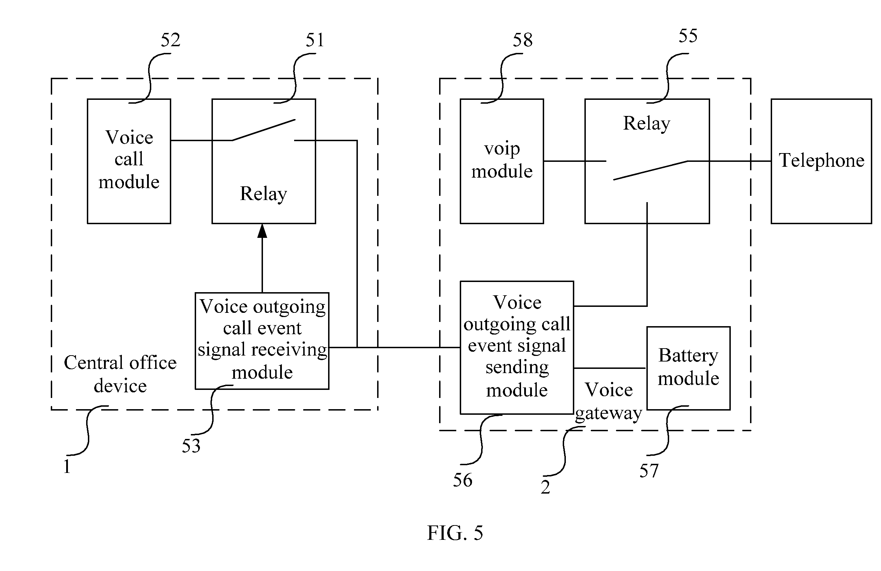

FIG. 5 is a schematic structural diagram of a system according to a fifth embodiment of the present invention. In this embodiment, when receiving a voice outgoing call event signal sent by a user side, a central office device provides a voice service for a user. Referring to FIG. 5, a voice gateway 2 and a central office device 1 are included in this embodiment. The central office device 1 includes a relay 51, a voice call module 52, and a voice outgoing call event signal receiving module 53. The voice gateway 2 includes a relay 55, a voice outgoing call event signal sending module 56, and a battery module 57. In order to represent a situation of a normal state (a user power supply system does not turn off), the voice gateway 2 further includes a voip module 58.

Reference may be made to the foregoing embodiments for specific functions of each module of the foregoing modules. In short, the voip module 58 is connected with the user side (such as, a telephone) when the user power supply system does not turn off, and the voice outgoing call event signal sending module 56 connects with the user side when the user power supply system turns off. The voice outgoing call event signal sending module 56 is configured to detect whether there is a voice outgoing call event at the user side (whether there is the voice outgoing call event at the user side may be determined by detecting a change of electrical characteristics of a telephone line), that is, whether the user picks up the phone, and send a voice outgoing call event signal to the central office device when there is the voice outgoing call event at the user side. The battery module 57 is configured to provide power for the voice outgoing call event signal sending module 56. The voip module 58 is configured to provide a voice service for the user when the user power supply system does not turn off, which may be realized by adopting the conventional art. That is, it is also the voip module that provides a voice service for a user in an existing voice gateway. The voice call module 52 is a voice call module with a high convergence ratio (the number of voice call modules 52 is much smaller than the number of users that may be served by the central office), and is configured to provide the voice service for the user. The voice outgoing call event signal receiving module 53 is configured to receive the voice outgoing call event signal sent by the voice outgoing call event signal sending module 56, and control, according to the voice outgoing call event, the relay 51 to be closed, so as to enable the voice call module 52 to be connected with the user side.

In this embodiment, when the user power supply system turns off, the user side is connected with the voice outgoing call event signal sending module. Furthermore, after detecting the voice outgoing call event of the user side, the voice outgoing call event signal sending module sends the voice outgoing call event signal to the voice outgoing call event signal receiving module, the voice outgoing call event signal receiving module controls, according to the voice outgoing call event signal, the relay in the central office device to be closed, so as to enable the voice call module in the central office device to be connected with the user side, and the voice call module in the central office device provides the voice service for the user side. Thus, the cost is reduced, and the operability is improved. Furthermore, the voice call module serves the user side when there is a voice outgoing call at the user side, so that the number of voice call modules may be reduced, and the device cost of the central office is reduced.

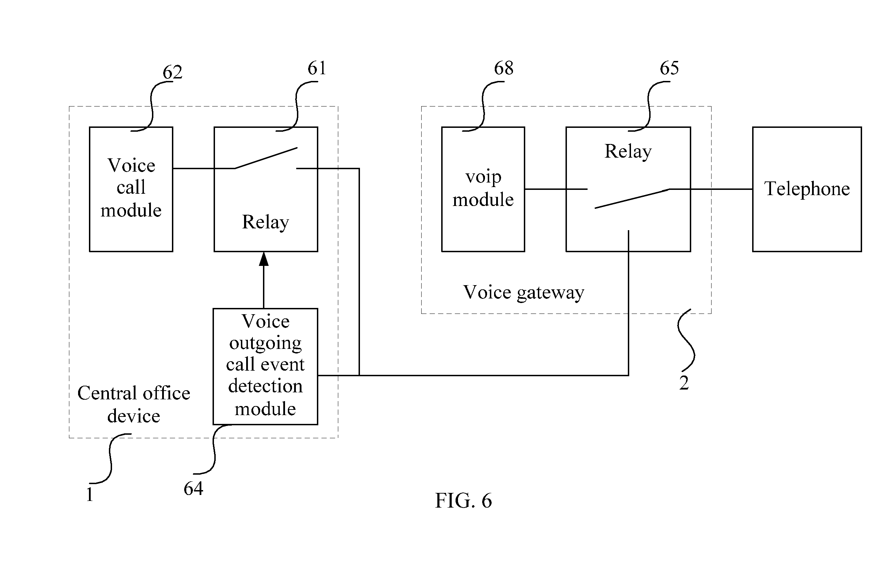

FIG. 6 is a schematic structural diagram of a system according to a sixth embodiment of the present invention. In this embodiment, when detecting that there is a voice outgoing call event at a user side, a central office device provides a voice service for a user. Referring to FIG. 6, a voice gateway 2 and a central office device 1 are included in this embodiment. The central office device 1 includes a relay 61, a voice call module 62, and a voice outgoing call event detection module 64. The voice gateway 2 includes a relay 65. In order to represent a situation of a normal state (a user power supply system does not turn off), the voice gateway 2 further includes a voip module 68.

Reference may be made to the foregoing embodiments for specific functions of each module of the foregoing modules. In short, the voip module 68 is connected with the user side (such as, a telephone) when the user power supply system does not turn off, and the voip module 68 is configured to provide a voice service for the user when the user power supply system does not turn off. The voip module 68 may be realized by adopting the conventional art. That is, it is also the voip module that provides a voice service for a user in an existing voice gateway. When the user power supply system turns off, the voice outgoing call event detection module 64 is connected with the user side. The voice outgoing call event detection module 64 is configured to detect whether there is a voice outgoing call event at the user side (whether there is the voice outgoing call event at the user side may be determined by detecting changes of electrical characteristics of a telephone line), that is, whether the user picks up the phone, and control the relay 61 to be closed when there is the voice outgoing call event at the user side, so as to enable the voice call module 62 to be connected with the user side. The voice call module 62 is configured to provide a voice service for the user.

In this embodiment, after the user power supply system turns off, the user side is connected with the voice outgoing call event detection module. Furthermore, after detecting the voice outgoing call event of the user side, the voice outgoing call event detection module controls the relay in the central office device to be closed, so as to enable the voice call module in the central office device to be connected with the user side, and the voice call module in the central office device provides the voice service for the user side. Thus, the cost is reduced, and the operability is improved. Furthermore, the voice call module serves the user side when there is a voice outgoing call at the user side, so that the number of voice call modules may be reduced, and the device cost of the central office is reduced.

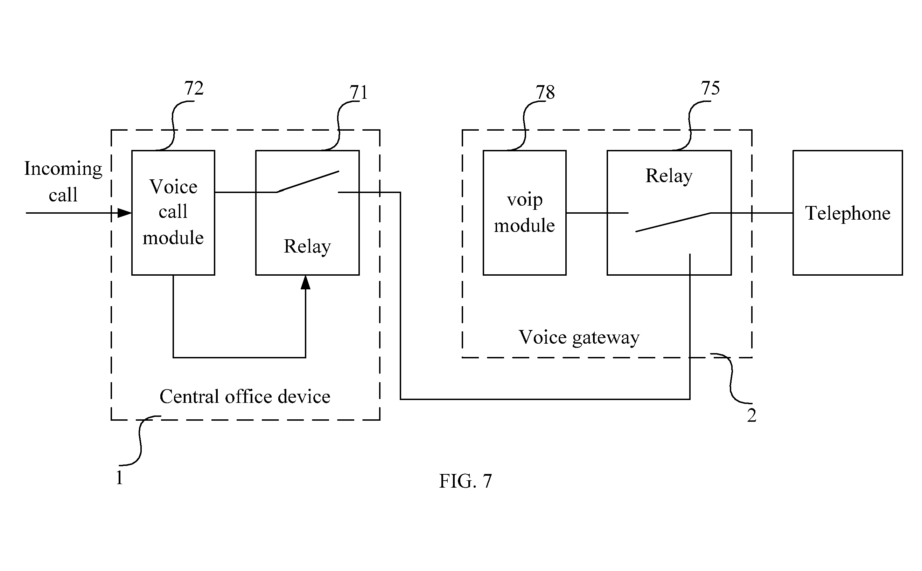

FIG. 7 is a schematic structural diagram of a system according to a seventh embodiment of the present invention. In this embodiment, when detecting that there is a voice incoming call event at a user side, a central office device provides a voice service for a user. Referring to FIG. 7, a voice gateway 2 and a central office device 1 are included in this embodiment. The central office device 1 includes a relay 71 and a voice call module 72. The voice gateway 2 includes a relay 75. In order to represent a situation of a normal state (a user power supply system does not turn off), the voice gateway 2 further includes a voip module 78.

Reference may be made to the foregoing embodiments for specific functions of each module of the foregoing modules. In short, the voip module 78 is connected with the user side (such as, a telephone) when the user power supply system does not turn off, and the voip module 78 is configured to provide a voice service for the user when the user power supply system does not turn off. The voip module 78 may be realized by adopting the conventional art. That is, it is also the voip module that provides a voice service for a user in an existing voice gateway. When the user power supply system turns off, one side of the relay 71 connects with the user side. The voice call module 72 is configured to detect whether there is a voice incoming call event at the user side (the voice incoming call is input from the voice call module, so the voice call module may detect whether there is the voice incoming call), and control the relay 71 to be closed when there is the voice incoming call event at the user side. Because one side of the relay 71 is connected with the user side, and the other side is connected with the voice call module 72, the voice call module 72 connects with the user side after the relay 71 is closed. The voice call module 72 is further configured to provide a voice service for the user.

In this embodiment, after the user power supply system turns off, the user side is connected with one side of the relay in the central office device, and the other side of the relay is connected with the voice call module in the central office device. Furthermore, after detecting the voice incoming call event of the user side, the voice call module in the central office device controls the relay in the central office device to be closed, so as to enable the voice call module in the central office device to connect with the user side, and the voice call module in the central office device provides the voice service for the user side. Thus, the cost is reduced, and the operability is improved. Furthermore, the voice call module serves the user side when there is a voice incoming call at the user side, so that the number of voice call modules may be reduced, and the device cost of the central office is reduced.

Persons of ordinary skill in the art may understand that all or part of the steps of the foregoing method embodiments may be implemented by a program instructing relevant hardware. The program may be stored in a computer readable storage medium. When the program is executed, the steps of the foregoing method embodiments are performed. The storage medium may be any medium that is capable of storing program codes, such as a ROM, a RAM, a magnetic disk, or an optical disk.

Finally, it should be noted that the preceding embodiments are merely used to describe the technical solutions of the present invention, but not intended to limit the technical solutions of the present invention. Although the present invention has been described in detail with reference to the exemplary embodiments, those of ordinary skill in the art should understand that they may still make modifications or equivalent replacements to the technical solutions of the present invention, however, these modifications or equivalent replacements cannot make the modified technical solutions to depart from the spirit and scope of the technical solutions of the present invention.

## Claims

1. A voice service processing method, comprising:
connecting, by a relay in a central office device, a user side with a voice call module in the central office device, when a user power supply system turns off, and there is a voice outgoing call or a voice incoming call at the user side; and
providing, by the voice call module in the central office device, a voice service for the user side.

2. The method according to claim 1, wherein there is a voice outgoing call or a voice incoming call at the user side comprises:
receiving a voice outgoing call event signal sent by the user side; or,
detecting that there is a voice outgoing call event at the user side; or,
detecting that there is a voice incoming call event at the user side.

3. A voice service processing method, comprising:
connecting, by a relay in a voice gateway, a user side with a central office device when a user power supply system turns off, and
receiving a voice service provided by the central office device for the user side when there is a voice outgoing call or a voice incoming call at the user side.

4. The method according to claim 3, further comprising:
sending a voice outgoing call event signal to the central office device after detecting that a voice outgoing call event occurs at the user side, so as to enable the central office device to provide a voice service for the user side according to the voice outgoing call event signal.

5. A central office device, comprising:
a relay, configured to connect a voice call module in the central office device with a user side when a user power supply system turns off, and there is a voice outgoing call or a voice incoming call at the user side; and
a voice call module, configured to provide a voice service for the user side when connected with the user side.

6. The central office device according to claim 5, further comprising:
a voice outgoing call event signal receiving module, configured to receive a voice outgoing call event signal of the user side, and control the relay according to the voice outgoing call event signal, so as to enable the voice call module to connect with the user side.

7. The central office device according to claim 5, further comprising:
a voice outgoing call event detection module, configured to detect a voice outgoing call event of the user side, and control the relay when detecting that there is the voice outgoing call event at the user side, so as to enable the voice call module to connect with the user side.

8. The central office device according to claim 5, wherein the voice call module is further configured to detect a voice incoming call event of the user side, and control the relay when detecting that there is the voice incoming call event at the user side, so as to enable the voice call module to connect with the user side.

9. The central office device according to claim 5, wherein the number of the voice call modules is smaller than the number of users that may be served by the central office device.

10. A voice gateway, comprising:
a relay, configured to connect a central office device with a user side when a user power supply system turns off, wherein the central office device is configured to provide a voice service for the user side when there is a voice outgoing call or a voice incoming call at the user side.

11. The voice gateway according to claim 10, further comprising:
a voice outgoing call event signal sending module, configured to detect a voice outgoing call event of the user side, and send a voice outgoing call event signal to the central office device after detecting that there is the voice outgoing call event at the user side, so as to enable the central office device to provide a voice service for the user side after the central office device receives the voice outgoing call event signal; and
a battery module, configured to provide electric power for the voice outgoing call event signal sending module.

12. The voice gateway according to claim 10, further comprising:
a voip module, configured to provide a voip voice service for the user side when the user power supply system does not turn off,
wherein the relay is further configured to connect the voip module with the user side when the user power supply system does not turn off.

13. A voice gateway power-off processing system, comprising:
a voice gateway, configured to connect a central office device with a user side when a user power supply system turns off; and
the central office device, configured to provide a voice service for the user side when the user power supply system turns off and there is a voice outgoing call or a voice incoming call at the user side.

14. The system according to claim 13, wherein
the voice gateway is the voice gateway according to claim 11; and
the central office device is the central office device according to claim 6.

15. The system according to claim 13, wherein
the voice gateway is the voice gateway according to claim 10; and
the central office device is the central office device according to claim 7 or 8.
